(19) Europäisches Patentamt
European Patent Office
Office européen des brevets

(11) EP 2 563 133 B1

(12) **EUROPEAN PATENT SPECIFICATION**

(45) Date of publication and mention of the grant of the patent:
**24.08.2016 Bulletin 2016/34**

(21) Application number: **11774617.2**

(22) Date of filing: **25.04.2011**

(51) Int Cl.:
***A01N 43/56*** *(2006.01)* ***A01N 47/40*** *(2006.01)*
***A01P 3/00*** *(2006.01)* ***A01P 7/04*** *(2006.01)*

(86) International application number:
**PCT/JP2011/002414**

(87) International publication number:
**WO 2011/135831 (03.11.2011 Gazette 2011/44)**

(54) **PESTICIDAL COMPOSITION AND ITS USE**

PESTIZIDZUSAMMENSETZUNG UND IHRE VERWENDUNG

COMPOSITION PESTICIDE ET UTILISATION ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2010 JP 2010104100**

(43) Date of publication of application:
**06.03.2013 Bulletin 2013/10**

(73) Proprietor: **SUMITOMO CHEMICAL COMPANY, LIMITED**
**Chuo-ku**
**Tokyo**
**104-8260 (JP)**

(72) Inventor: **MATSUZAKI, Yuichi**
**Toyonaka-shi**
**Osaka 560-0021 (JP)**

(74) Representative: **Hoffmann Eitle**
**Patent- und Rechtsanwälte PartmbB**
**Arabellastraße 30**
**81925 München (DE)**

(56) References cited:
**WO-A1-86/02641**
**WO-A1-92/12970**
**WO-A1-2010/040623**
**JP-A- 2010 083 883**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a pesticidal composition and its use.

### Background Art

Many compounds have been developed for controlling pests and actually used (see, for example, WO86/002641 and WO92/012970).

WO 2010/040623 discloses a combination, suitable for agricultural use comprising (i) a compound of the formula (X)

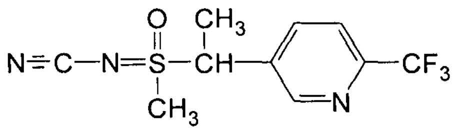

and (ii) one or more agents, each independently selected from (A) a certain fungicide; (B) a certain insecticide and/or nematicide; (C) a certain protein produced by the plant pathogenic bacterium, Erwinia amylovora; (D) a certainbiological strain, (E) a certain Isoflavone; (F) a plant growth regulator; and (G) a plant activator.

### Summary of Invention

### Technical Problem

An object of the present invention is to provide a composition having an excellent pesticidal effect.

### Solution to Problem

The inventor of the present invention studied for seeking a composition having an excellent pesticidal effect and found that a composition comprising a carboxamide compound of formula (1) and sulfoxaflor has an excellent pesticidal effect and then completed the present invention.

Thus the present invention provides a pesticidal composition comprising sulfoxaflor and a carboxamide compound of formula (1):

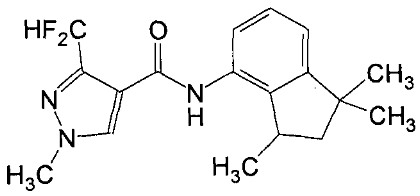

(1).

Also, the invention provides a method of controlling pest which comprises treating a plant or the soil where a plant grows with an effective amount of a carboxamide compound of the above formula (1) and sulfoxaflor:

Preferred embodiments of the invention are as defined in the appended dependent claims and/or the following detailed description.

Advantageous Effect of Invention

According to the present invention, various pests can be controlled.

Description of Embodiments

The pesticidal composition of the present invention (hereinafter referred to as "composition") comprises sulfoxaflor and a carboxamide compound (1), which is hereinafter referred to as "compound (1)":

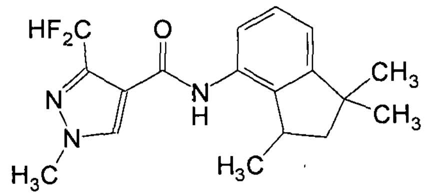

(1).

The compound (1) is described in, for example, WO86/002641 or WO92/012970, and can be prepared by the method described therein.

Sulfoxaflor is a compound described in, for example, WO 2007/095229, and can be prepared by a method described therein.

The weight ratio of the compound (1) to sulfoxaflor in the "composition" is usually from 0.01/1 to 500/1, and preferably from 0.01/1 to 4/1 of compound (1)/sulfoxaflor.

Although the "composition" may be a mixture itself of compound (1) and sulfoxaflor, the "composition" is usually prepared by mixing compound (1), sulfoxaflor and an inert carrier, and if necessary, by adding a surfactant and/or another auxiliary for formulation and by formulating the mixture into, for example, oil formulation, emulsifiable concentrate, flowable formulation, wettable powder, water dispersible granules, powder, or granules. The formulation, which is used alone or by adding another inert component, can be used as a pesticide.

The total content of compound (1) and sulfoxaflor in a "composition" is usually 0.1-99% by weight, preferably 0.2-90% by weight, and more preferably 1-80% by weight.

Examples of the solid carriers used for the formulation include fine powder or granules of, for example, mineral materials such as kaolin clay, attapulgite, bentonite, montmorillonite, acid clay, pyrophillite, talc, diatomaceous earth and calcite; natural organic materials such as corncob powder and walnut powder; synthesized organic materials such as urea; salts such as potassium carbonate and ammonium sulfate; synthetic inorganic materials such as synthesized hydrous silicon oxide.

Examples of the liquid carriers include aromatic hydrocarbons such as xylene, alkylbenzene and methylnaphthalene; alcohols such as 2-propanol, ethylene glycol, propylene glycol and ethylene glycol mono-ethyl ether; ketones such as acetone, cyclohexanone and isophorone; vegetable oils such as soybean oil and cotton seed oil; petrolic aliphatic hydrocarbons; esters; dimethylsulfoxide; acetonitrile; and water.

Examples of the surfactants include anionic surfactants such as alkyl sulfate ester salts, alkylarylsulfonate salts, dialkylsulfosuccinate salts, polyoxyethylene alkylaryl ether phosphoric acid ester salts, lignin sulfonate and naphthalene sulfonate formaldehyde polycondensed products; non-ionic surfactants such as polyoxyethylene alkyl aryl ethers, polyoxyethylene alkyl polyoxypropylene block copolymers and sorbitan fatty acid esters; and cationic surfactants such as alkyl trimethyl ammonium salts.

Examples of the other auxiliaries for formulation include water-soluble polymers such as polyvinyl alcohol and polyvinylpyrrolidone; polysaccharides such as gum arabic, alginic acid and its salt, CMC (carboxymethylcellulose) and xanthan gum; inorganic materials such as aluminum magnesium silicate and alumina sol; preservatives; coloring agents;, and stabilizers such as PAP (acidic isopropyl phosphate) and BHT.

The "composition" can be also prepared by formulating compound (1) and sulfoxaflor according to the method as described in the above, and then making the formulations or their diluents.

The "composition" can be used for protecting plants from damage by pest (for example, insect pest and plant disease) which gives damage to the plant by e.g. feeding or sucking.

Examples of insect pest which can be controlled by the "composition" include the followings.

Hemiptera: Planthoppers (Delphacidae) such as small brown planthopper (Laodelphax striatellus), brown rice planthopper (Nilaparvata lugens) and white-backed rice planthopper (Sogatella furcifera); leafhoppers (Deltocephalidae) such as green rice leafhopper (Nephotettix cincticeps), green rice leafhopper (Nephotettix virescens); aphids (Aphididae) such as cotton aphid (Aphis gossypii), green peach aphid (Myzus persicae), cabbage aphid (Brevicoryne brassicae), potato aphid (Macrosiphum euphorbiae), foxglove aphid (Aulacorthum solani), oat bird-cherry aphid (Rhopalosiphum padi), tropical citrus aphid (Toxoptera citricidus); stink bugs (Pentatomidae) such as green stink bug (Nezara antennata), bean bug (Riptortus clavetus), rice bug (Leptocorisa chinensis), white spotted spined bug (Eysarcoris parvus) and brown marmorated stink bug (Halyomorpha mista), tarnished plant bug (Lygus lineolaris); whiteflies (Aleyrodidae) such as greenhouse whitefly (Trialeurodes vaporariorum), silverleaf whitefly (Bemisia argentifolii); scales (Coccidae) such as Calfornia red scale (Aonidiella aurantii), San Jose scale (Comstockaspis perniciosa), citrus north scale (Unaspis citri), red wax scale (Ceroplastes rubens), cottonycushion scale (Icerya purchasi); Tingidae family; Psyllidae family.

Lepidoptera: Pyralid moths (Pyralidae) such as rice stem borer (Chilo suppressalis), yellow rice borer (Tryporyza

incertulas), rice leafroller (Cnaphalocrocis medinalis), cotton leafroller (Notarcha derogate), Indian meal moth (Plodia interpunctella), oriental corn borer (Ostrinia furnacalis), cabbage webworm (Hellula undalis) and bluegrass webworm (Pediasia teterrellus); owlet moths (Noctuidae) such as common cutworm (Spodoptera litura), beet armyworm (Spodoptera exigua), armyworm (Pseudaletia separate), cabbage armyworm (Mamestra brassicae), black cutworm (Agrotis ipsilon), beet semi-looper (Plusia nigrisigna), Thoricoplusia spp., Heliothis spp., and Helicoverpa spp.; white butterflies (Pieridae) such as common white (Pieris rape); tortricid moths (Tortricidae) such as Adoxophyes spp., oriental fruit moth (Grapholita molesta), soybean pod borer (Leguminivora glycinivorella), azuki bean podworm (Matsumuraeses azukivora), summer fruit tortrix (Adoxophyes orana fasciata), smaller tea tortrix (Adoxophyes honmai.), oriental tea tortrix (Homona magnanima), apple tortrix (Archips fuscocupreanus) and codling moth (Cydia pomonella); leafblotch miners (Gracillariidae) such as tea leafroller (Caloptilia theivora) and apple leafminer (Phyllonorycter ringoneella); Carposinidae such as peach fruit moth (Carposina niponensis); lyonetiid moths (Lyonetiidae) such as Lyonetia spp.; tussock moths (Lymantriidae) such as Lymantria spp. and Euproctis spp.; yponomeutid moths (Yponomeutidae) such as diamondback moth (Plutella xylostella); gelechiid moths (Gelechiidae) such as pink bollworm (Pectinophora gossypiella) and potato tuberworm (Phthorimaea operculella); tiger moths and allies (Arctiidae) such as fall webworm (Hyphantria cunea); tineid moths (Tineidae) such as casemaking clothes moth (Tinea translucens) and webbing clothes moth (Tineola bisselliella),

Thysanoptera: Thrips (Thripidae) such as western flower thrips (Frankliniella occidentalis), melon thrips (Thrips parmi), yellow tea thrips (Scirtothrips dorsalis), onion thrips (Thrips tabaci), flower thrips (Frankliniella intonsa), tobacco thrips (Frankliniella fusca);
Diptera: housefly (Musca domestica), common mosquito (Culex pipiens pallens), Tabanus (Tabanus trigonus), onion fly (Hylemya antiqua), seed-corn fly (Hylemya platura), Chinese anopheles (Anopheles sinensis), Japanese leaf miner (Agromyza oryzae), rice leafminer (Hydrellia griseola), rice stem maggot (Chlorops oryzae), melon fly (Dacus cucurbitae), mediterranean fruit fly (Ceratitis capitata) and Liriomyza tritrifolii;
Coleoptera: 28-spotted ladybird (Epilachna vigintioctopunctata), cucurbit leaf beetle (Aulacophora femoralis), Phyllotreta striolata, rice leaf beetle (Oulema oryzae), rice plant weevil (Echinocnemus squameus), rice water weevil (Lissorhoptrus oryzophilus), boll weevil (Anthonomus grandis), adzuki bean weevil (Callosobruchus chinensis), zoysia billbug (Sphenophorus venatus), Japanese beetle (Popillia japonica), cupreous chafer (Anomala cuprea), corn rootworm families (Diabrotica spp.), Colorado potato beetle (Letinotarsa decemlineata), beetle of family Elateridae (Agriotes spp.), tobacco beetle (Lasioderma serricorne), Anthrenus (Anthrenus verbasci), rust-red flour beetle (Tribolium castaneum), power post beetle (Lyctus brunneus), white-spotted longicorn beetle (Anoplophora malasiaca), common pine shoot beetle (Tomicus piniperda), and the like;
Orthoptera: grasshoppers (Locusta migratoria), mole cricket (Gryllotalpa Africana), Oxya yezoensis, Oxya japonica, and the like;
Hymenoptera: turnip sawfly (Athalia rosae), leafcutter ant (Acromyrmex spp.), fire ants (Solenopsis spp.), and the like;
Blattaria: German cockroach (Blattella germanica), smokybrown cockroach (Periplaneta fuliginosa), American cockroach (Periplaneta americana), black Mississippi cockroach (Periplaneta brunnea), Oriental cockroach (Blatta orientalis), and the like.

Examples of the plant diseases which can be controlled by the "composition" include the followings.

Rice diseases: Magnaporthe grisea, Cochliobolus miyabeanus, Rhizoctonia solani, Gibberella fujikuroi;
Wheat diseases: Erysiphe graminis, Fusarium graminearum, F. avenaceum, F. culmorum, Microdochium nivale, Puccinia striiformis, P. graminis, P. recondita, Micronectriella nivale, Typhula sp., Ustilago tritici, Tilletia caries, Pseudocercosporella herpotrichoides, Mycosphaerella graminicola, Stagonospora nodorum, Pyrenophora tritici-repentis;
Barley diseases: Erysiphe graminis, Fusarium graminearum, F. avenaceum, F. culmorum, Microdochium nivale, Puccinia striiformis, P. graminis, P. hordei, Ustilago nuda, Rhynchosporium secalis, Pyrenophora teres, Cochliobolus sativus, Pyrenophora graminea, Rhizoctonia solani;
Maize diseases: Ustilago maydis, Cochliobolus heterostrophus, Gloeocercospora sorghi, Puccinia polysora, Cercospora zeae-maydis, Rhizoctonia solani;
Citrus diseases: Diaporthe citri, Elsinoe fawcetti, Penicillium digitatum, P. italicum, Phytophthora parasitica, Phytophthora citrophthora;
Apple diseases: Monilinia mali, Valsa ceratosperma, Podosphaera leucotricha, Alternaria alternata apple pathotype, Venturia inaequalis, Colletotrichum acutatum, Phytophtora cactorum;
Pear diseases: Venturia nashicola, V. pirina, Alternaria alternata Japanese pear pathotype, Gymnosporangium haraeanum, Phytophtora cactorum;
Peach diseases: Monilinia fructicola, Cladosporium carpophilum, Phomopsis sp.;
Grape diseases: Elsinoe ampelina, Glomerella cingulata, Uninula necator, Phakopsora ampelopsidis, Guignardia

bidwellii, Plasmopara viticola;
Persimmon diseases: Gloesporium kaki, Cercospora kaki, Mycosphaerela nawae;
Gourd diseases: Colletotrichum lagenarium, Sphaerotheca fuliginea, Mycosphaerella melonis, Fusarium oxysporum, Pseudoperonospora cubensis, Phytophthora sp., Pythium sp.;
Tomato diseases: Alternaria solani, Cladosporium fulvum, Phytophthora infestans;
Eggplant diseases: Phomopsis vexans, Erysiphe cichoracearum;
Brassicaceous vegetable diseases: Alternaria japonica, Cercosporella brassicae, Plasmodiophora brassicae, Peronospora parasitica;
Welsh onion diseases: Puccinia allii, Peronospora destructor;
Soybean diseases: Cercospora kikuchii, Elsinoe glycines, Diaporthe phaseolorum var. sojae, Septoria glycines, Cercospora sojina, Phakopsora pachyrhizi, Phytophthora sojae, Rhizoctonia solani, Corynespora casiicola, Sclerotinia sclerotiorum;
Kidney bean diseases: Colletrichum lindemthianum;
Peanut diseases: Cercospora personata, Cercospora arachidicola, Sclerotium rolfsii;
Pea diseases: Erysiphe pisi;
Potato diseases: Alternaria solani, Phytophthora infestans, Phytophthora erythroseptica, Spongospora subterranean, f. sp. Subterranean;
Strawberry diseases: Sphaerotheca humuli, Glomerella cingulata;
Tea diseases: Exobasidium reticulatum, Elsinoe leucospila, Pestalotiopsis sp., Colletotrichum theae-sinensis;
Tobacco diseases: Alternaria longipes, Erysiphe cichoracearum, Colletotrichum tabacum, Peronospora tabacina, Phytophthora nicotianae;
Rapeseed diseases: Sclerotinia sclerotiorum, Rhizoctonia solani;
Cotton diseases: Rhizoctonia solani;
Beet diseases: Cercospora beticola, Thanatephorus cucumeris, Thanatephorus cucumeris, Aphanomyces cochlioides;
Rose diseases: Diplocarpon rosae, Sphaerotheca pannosa, Peronospora sparsa;
Diseases of chrysanthemum andasteraceae: Bremia lactuca, Septoria chrysanthemi-indici, Puccinia horiana;
Diseases of various plants: Pythium aphanidermatum, Pythium debarianum, Pythium graminicola, Pythium irregulare, Pythium ultimum, Botrytis cinerea, Sclerotinia sclerotiorum;
Radish diseases: Alternaria brassicicola;
Zoysia diseases: Sclerotinia homeocarpa, Rhizoctonia solani;
Banana diseases: Mycosphaerella fijiensis, Mycosphaerella musicola;
Sunflower diseases: Plasmopara halstedii;
Seed diseases or diseases in the initial stage of growth of various plants caused by Aspergillus spp., Penicillium spp., Fusarium spp., Gibberella spp., Tricoderma spp., Thielaviopsis spp., Rhizopus spp., Mucor spp., Corticium spp., Rhoma spp., Rhizoctonia spp., Diplodia spp., or the like;
Virus diseases of various plants mediated by Polymixa spp., or Olpidium spp..

Examples of the plants for which the "composition" can be used are as follows:

Agricultural crops: maize, rice, wheat, barley, rye, oat, sorghum, cotton, soybean, peanut, buckwheat, sugar beet, rapeseed, sunflower, sugar cane, and tobacco;
Vegetables: Solanaceous vegetables (such as eggplant, tomato, green pepper, hot pepper, potato), Cucurbitaceous vegetables (such as cucumber, pumpkin, zucchini, watermelon, melon, squash); Cruciferous vegetables (such as radish, turnip, horseradish, kohlrabi, Chinese cabbage, cabbage, brown mustard, broccoli, cauliflower), Asteraceous vegetables (such as burdock, garland chrysanthemum, artichoke, lettuce), Liliaceous vegetables (such as Welsh onion, onion, garlic, asparagus), Umbelliferous vegetables (such as carrot, parsley, celery, parsnip), Chenopodiaceous vegetables (such as spinach, chard), Lamiaceous vegetables (such as Japanese basil, mint, basil), strawberry, sweet potato, yam, aroid;
Flowering plants;
Ornamental foliage plants;
Turf;
Fruit trees: pome fruits (such as apple, common pear, Japanese pear, Chinese quince, quince), stone fruits (such as peach, plum, nectarine, Japanese plum, cherry, apricot, prune), citrus (such as mandarin, orange, lemon, lime, grapefruit), nuts (such as chestnut, walnut, hazel nut, almond, pistachio, cashew nut, macadamia nut), berry fruits (such as blueberry, cranberry, blackberry, raspberry), grape, persimmon, olive, loquat, banana, coffee, date, coconut palm;
Trees other than fruit trees: tea, mulberry, flowering trees, street trees (such as ash tree, birch, dogwood, eucalyptus,

ginkgo, lilac, maple tree, oak, poplar, cercis, Chinese sweet gum, plane tree, zelkova, Japanese arborvitae, fir tree, Japanese hemlock, needle juniper, pine, spruce, yew).

The above-described plants may be those having resistance imparted by genetic engineering technique.
Among the above plants, the "composition" is expected to have excellent controlling effect particularly to plant disease caused in soybean.
Among the above plant diseases, soybean diseases to which especially excellent effect of the "composition" can be expected are Rhizoctonia solani, Cercospora kikuchii, Septoria glycines, Corynespora casiicola, Phakopsora pachyrizi, Sclerotinia sclerotiorum, Cercospora sojina, and the like.
Following compositions exemplify an embodiment of the "composition":

a composition comprising compound (1) and sulfoxaflor;
a composition comprising compound (1) and sulfoxaflor in which the weight ratio of compound (1) to sulfoxaflor is 0.01/1 to 4/1;
The method of controlling pest (hereinafter referred to as "controlling method") can be carried out by treating a plant or the soil where a plant grows with an effective amount of compound (1) and sulfoxaflor.

The part of plant to be treated is stem and leaf of a plant, seed or bulb of a plant, and the bulb means bulb, corm, rootstock, tuber, tuberous root and rhizophore.
In the "controlling method", the treatment of a plant or the soil where a plant grows with compound (1) and sulfoxaflor can be carried out separately at the same timing, but the treatment is usually carried out by using a "composition" in light of convenience.
In the "controlling method", the treatment with compound (1) and sulfoxaflor is, for example, stems and leaves application, soil application, roots application or seeds application.
Examples of the stems and leaves application include a treatment for surface of cultivated plant by a stem and leaves spray or a stem and tree spray.
Examples of the root application include a method of dipping a whole plant or the root of a plant into a liquid containing compound (1) and sulfoxaflor and a method of sticking a solid preparation comprising compound (1), sulfoxaflor and a solid carrier onto the root of a plant.
Examples of the soil application include a method of spraying a "composition" onto a soil, a method of mixing a "composition" with a soil and a method of irrigating a "composition" into the soil.
Examples of the seed application include a method of treating seeds or bulbs of a plant to be protected from a plant disease with a "composition". Particularly, the application can be carried out by spraying a suspension of a "composition" to the surface of seeds or bulbs, or by spreading wettable powder, emulsifiable concentrate or flowable formulation itself or a mixture thereof with a small amount of water on the seeds or the bulbs, or by dipping the seeds into a solution of a "composition" for a prescribed time, by film coating application or pellet coating application.
The amount of compound (1) and sulfoxaflor used in the "controlling method" is different depending on, for example, the kind of a plant to be treated, the kind of a plant disease to be controlled and its frequency, the kind of a formulation, timing of treatment, method of treatment, place of treatment, and weather condition.
When a "composition" is applied to stems and/or leaves of a plant or to the soil where a plant grows , the total amount of compound (1)and sulfoxaflor is usually 1-500g/1000m$^2$, preferably 2-200g/1000m$^2$ and more preferably 10-100g/1000m$^2$.
When a "composition" is applied to seeds of a plant, the total amount of compound (1) and sulfoxaflor is usually 0.001-10g/kg of the seeds, and preferably 0.01-1g/kg of the seeds.
An emulsifiable concentrate, wettable powder or flowable formulation is usually used by diluting the formulation with a small amount of water and spraying the diluted formulation. In this case, the concentration of compound (1) and sulfoxaflor in total of the diluted formulation is usually 0.0005-2% by weight and preferably 0.005-1% by weight.
A powder formulation or granule formulation and the like is usually used without dilution.

**Examples**

The present invention is further explained in detail with Formulation Examples and Test Examples. However, the present invention is not limited by the following Examples.
In the following Examples, "part" means "part by weight" unless otherwise provided.

Formulation Example 1

Compound (1) (2.5 parts), sulfoxaflor (1.25 parts), polyoxyethylene styryl phenyl ether (14 parts), calcium

dodecylbenzene sulfonate (6 parts) and xylene (76.25 parts) are thoroughly mixed to give each of formulations, respectively.

Formulation Example 2

Compound (1) (2 parts), sulfoxaflor (8 parts), a mixture of white carbon and polyoxyethylene alkyl ether sulfate ammonium salt (weight ratio 1:1)(35 parts) and water (55 parts) are mixed and the mixture is milled by wet-milling method to give each of formulations, respectively.

Formulation Example 3

Compound (1) (5 parts), sulfoxaflor (10 parts), sorbitan trioleate (1.5 parts), and an aqueous solution (28.5 parts) containing polyvinyl alcohol (2 parts) are mixed and the mixture is milled by wet-milling method. An aqueous solution (45 parts) containing xanthan gum (0.05 part) and aluminum magnesium silicate (0.1 part) is added to the milled mixture. To the mixture is added propylene glycol (10 parts) and the resultant mixture is mixed by stirring to give each of formulations, respectively.

Formulation Example 4

Compound (1) (1 part), sulfoxaflor (4 parts), synthesized hydrous silicon oxide (1 part), calcium lignin sulfonate (3 parts), bentonite (30 parts) and kaolin clay (62 parts) are thoroughly mixed and milled. Water is added to the mixture and the mixture is sufficiently kneaded, granulated and then dried to give each of formulations, respectively.

Formulation Example 5

Compound (1) (12.5 parts), sulfoxaflor (37.5 parts), calcium lignin sulfonate (3 parts), sodium lauryl sulfate (2 parts) and synthesized hydrous silicon oxide (45 parts) are thoroughly mixed and milled to give each of formulations, respectively.

Formulation Example 6

Compound (1) (3 parts), sulfoxaflor (2 parts), kaolin clay (85 parts) and talc (10 parts) are thoroughly mixed and milled to give each of formulations, respectively.
Test Examples using each of the "compositions" are shown in the following.

Test Example

A cyclohexanone solution (100microL) containing prescribed amount (weight) of a test compound was applied on seeds of soybean (variety:Natto shoryu) (10g) by using a rotary apparatus for seed treatment (Seed dresser, manufactured by Hans-Ulrich Hege GmbH).
One day after the application, plastic pot was filled with soil contaminated by Rhizoctonia solani, and the seeds treated with the test compounds were seeded in the soil and cultivated in a glass-greenhouse for 20 days (hereinafter referred to as "treated plot").
Thereafter, the presence of disease caused by Rhizoctonia solani in the young plants which germinated from each seed was observed and disease severity was calculated according to the following calculation formula (1).
On the other hand, seeds of soybean which are not treated as above were cultivated in the same way as above (hereinafter referred to as "non-treated plot") and the disease severity in the "non-treated plot" was calculated in the same way as the above "treated plot".
On the basis of the above severity in "treated plot" and "non-treated plot", efficacy in "treated plot" was evaluated according to the following calculation formula (2).
As a result, it could be confirmed that the cyclohexanone solution containing a "carboxamide compound" and sulfoxaflor has an excellent effect for controlling plant disease in the treated plot.
The results are shown in Table 1.

Calculation formula (1):
Disease severity (%) =
(number of infected young plants / total number of young plants) x 100

Calculation formula (2):
Efficacy (%) =
[1 - (disease severity in "treated plot" / disease severity in "non-treated plot")] x 100

[Table 1]

| "carboxamide compound (1)" [g / 100kg of seeds] | sulfoxaflor [g /100kg of seeds] | efficacy (%) |
|---|---|---|
| 0.2 | 5 | 78.9 |
| 0.2 | --- | 47.4 |

## Industrial applicability

A pesticidal composition comprising compound (1) and sulfoxaflor is useful for controlling pests.

## Claims

1. A pesticidal composition comprising sulfoxaflor and a carboxamide compound of formula (1)

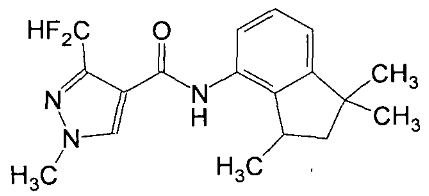

(1) .

2. The pesticidal composition of claim 1, wherein the weight ratio of the compound (1) to sulfoxaflor is 0.01:1 to 4:1.

3. A method of controlling pest comprising treating a plant or the soil where the plant grows with an effective amount of a carboxamide compound of formula (1) as defined in claim 1, and sulfoxaflor.

4. The method of claim 3, wherein the weight ratio of the compound (1) to sulfoxaflor is 0.01:1 to 4:1.

5. The method of claim 3 or 4, wherein the plant is soybean.

## Patentansprüche

1. Pestizid-Zusammensetzung, umfassend Sulfoxaflor und eine Carboxamidverbindung der Formel (1):

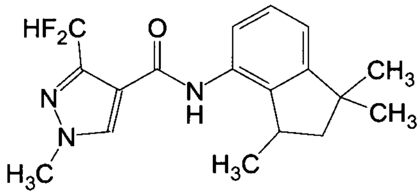

(1).

2. Pestizid-Zusammensetzung gemäss Anspruch 1, wobei das Gewichtsverhältnis von Verbindung (1) zu Sulfoxaflor 0,01:1 bis 4:1 beträgt.

3. Verfahren zur Bekämpfung von Schädlingen, umfassend das Behandeln einer Pflanze oder des Bodens, auf dem die Pflanze wächst, mit einer wirksamen Menge einer Carboxamidverbindung der Formel (1), wie in Anspruch 1 definiert, und Sulfoxaflor.

4. Verfahren gemäss Anspruch 3, wobei das Gewichtsverhältnis von Verbindung (1) zu Sulfoxaflor 0,01:1 bis 4:1 beträgt.

5. Verfahren gemäss Anspruch 3 oder 4, wobei die Pflanze eine Sojabohne ist.

**Revendications**

1. Composition pesticide comprenant du sulfoxaflor et un composé de carboxamide de formule (1) :

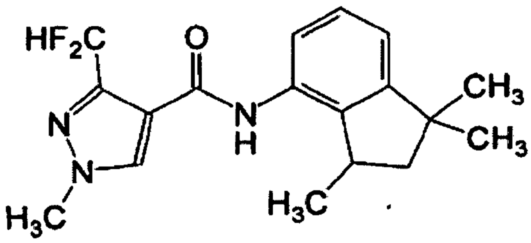

(1) .

2. Composition pesticide selon la revendication 1, dans laquelle le rapport en poids du composé (1) au sulfoxaflor est de 0,01:1 à 4:1.

3. Procédé de contrôle des nuisibles comprenant le traitement d'une plante ou du sol où la plante pousse avec une quantité efficace d'un composé de carboxamide de formule (1) tel que défini dans la revendication 1, et de sulfoxaflor.

4. Procédé selon la revendication 3, dans lequel le rapport en poids du composé (1) au sulfoxaflor est de 0,01:1 à 4:1.

5. Procédé selon la revendication 3 ou 4, dans lequel la plante est le soja.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 86002641 A
- WO 92012970 A
- WO 2010040623 A
- WO 2007095229 A